# EUROPÄISCHE PATENTSCHRIFT

(11) **EP 0 782 489 B1**
(45) Veröffentlichungstag und Bekanntmachung des Hinweises auf die Patenterteilung: **18.03.1998**
(21) Anmeldenummer: 95925718.9
(22) Anmeldetag: 22.07.1995
(51) Int. Cl.: B23K 26/00

(54) **VERFAHREN ZUM VERSCHWEISSEN VON WERKSTÜCKEN**
PROCESS FOR WELDING WORKPIECES
PROCEDE DE SOUDAGE DE PIECES

(30) Priorität: 23.09.1994 DE 4434125; 10.01.1995 DE 19500512
(43) Veröffentlichungstag der Anmeldung: 09.07.1997
(73) Patentinhaber: Fraunhofer-Gesellschaft zur Förderung der angewandten Forschung e.V., 80636 München (DE)
(72) Erfinder: BEYER, Eckhard, D-52159 Roetgen-Rott (DE); IMHOFF, Ralf, D-52072 Aachen (DE); NEUENHAHN, Jan, D-52074 Aachen (DE); MAIER, Christof, D-52070 Aachen (DE)
(74) Vertreter: Eichler, Peter, Dipl.-Ing.
(86) Internationale Anmeldenummer: DE9500965
(87) Internationale Veröffentlichungsnummer: WO9609135

(56) Entgegenhaltungen:
- DE-U- 8 716 668
- US-A- 4 507 540
- US-A- 5 006 688

## Beschreibung

Die Erfindung bezieht sich auf ein Verfahren zum Verschweißen von Werkstücken mit eine Verdampfung von Werkstoff bewirkender Laserstrahlung, bei dem im Nahtbereich winklige Flächen und mindestens eine Kante aufweisende Werkstücke eingesetzt werden, insbesondere Taylored Blanks oder verzinkte Bleche (Siehe z.B. DE-U-8 716 668).

Beim Verschweißen von Blechen und von aus Blechen bestehenden Bauteilen werden Laserschweißverfahren eingesetzt. Solche Bauteile werden als Taylored Blanks bezeichnet und sind beispielsweise Bestandteile einer Karosseriebaugruppe eines Kraftfahrzeugs. Als konkretes Beispiel für Taylored Blanks werden hier stark gewölbte tunnelförmige Bleche zur Umkleidung einer Kardanwelle eines hinterradangetriebenen Kraftfahrzeugs genannt, die mit daran anschließenden Bodenblechen verschweißt werden müssen. Um die gewünschte hochwertige Verschweißung solcher Taylored Blanks zu erreichen, müssen die betreffenden Bleche eine möglichst präzise Nahtvorbereitung erfahren, wie auch eine exakte Positionierung zum Verschweißen. Hinzu kommen besondere Maßnahmen bei der Positionierung des Bearbeitungskopfs der Laserschweißvorrichtung, damit der Laserstrahl ungestört durch die vorspringende Kante des dickeren Bauteils die Laserstrahlung dort zur Wirkung bringen kann, wo sie für eine hochwertige Verschweißung benötigt wird.

Die US-A-4 507 540 und die US-A- 5 006 688 offenbaren bereits ein Verfahren zum Verschweißen von Werkstücken mit eine Verdampfung von Werkstoff bewirkender Laserstrahlung, wobei beim Verschweißen der Werkstücke außer der Laserstrahlung ein Lichtbogen in den werkstücknahen Prozeßbereich der Laserstrahlung geführt wird. Im Nahtbereich werden aber keine winklige Flächen sowie keine Kanten eingesetzt.

Der Erfindung liegt daher die Aufgabe zugrunde, ein Verfahren mit den eingangs genannten Verfahrensschritten so zu verbessern, daß Aufwendungen für eine präzise Nahtvorbereitung beim Herstellen der Werkstücke und bei ihrer Positionierung zum Verschweißen entfallen können, ohne daß dadurch die Qualität der Schweißverbindung beeinträchtigt wird.

Diese Aufgabe wird dadurch gelöst, daß beim Verschweißen der Werkstücke außer der Laserstrahlung ein Lichtbogen in den werkstücknahen Prozeßbereich der Laserstrahlung geführt wird, wobei die Führung des Lichtbogens auf der Kante eines Werkstücks erfolgt.

Da es beim Verschweißen von Taylored Blanks bzw. von im Nahtbereich unterschiedlich dicken Werkstücken durchweg schwierig ist, mit einem einzigen Mittel zur Zuführung von Schweißenergie ein befriedigendes Ergebnis zu erreichen, liegt die Hauptbedeutung der Erfindung zunächst darin, die Schweißenergie außer mit der Laserstrahlung auch mit einem Lichtbogen zuzuführen. Die durch den Lichtbogen zugeführte Energie dient dem zumindest teilweisen Aufschmelzen der vorspringenden Kante des dickeren Werkstücks, wobei der Lichtbogen von der Elektrode im wesentlichen mit dieser vorspringenden Kante geführt wird. Der durch den Laserprozeß generierte Metalldampf, bzw. das Plasma sowie die hohe Feldstärke an der Kante beeinflussen des Lichtbogen derart, daß eine stabile Abschmelzung der freiliegenden Schnittkante und ein Einfließen der Schmelze in die Verbindungszone der Bleche auch bei hohen Prozeßgeschwindigkeiten erfolgt. Dabei wird also diese Kante abgeschmolzen und damit abgerundet. Abgeschmolzene Schmelze fließt in den Schweißbereich und einen hier möglicherweise vorhandenen Spalt, der infolgedessen zumindest zum Teil ausgefüllt bzw. aufgefüllt wird. Insbesondere wird ein eine Kerbwirkung im Werkstück bewirkender Nahteinfall vermieden. Insgesamt erfolgt eine Abrundung des Verschweissungsbereichs bzw. des Nahtbereichs. Die in den Nahtbereich einfließende Schmelze ermöglicht es, weniger präzise Nahtvorbereitungen zuzulassen und die Positionierungsgenauigkeit der zu verbindenden Werkstücke mit größeren Toleranzen zu gestatten. Die Fehlerhäufigkeit wird durch das größere Schmelzvolumen geringer, so daß der Verschweißungsprozeß sicherer wird. Außerdem werden höhere Schweißgeschwindigkeiten ermöglicht, weil durch den Lichtbogen vergleichsweise mehr Energie eingekoppelt werden kann. Das Schweißverfahren wird dadurch preiswerter.

Das erfindungsgemäße Verfahren ist jedoch nicht nur zum Verschweißen von Taylored Blanks geeignet. Es eignet sich vielmehr für alle Werkstücke, die im Nahtbereich winklige Flächen und mindestens eine Kante aufweisen. Es erfolgt dann stets eine Führung des Lichtbogens auf der Kante eines Werkstücks und zwischen den Werkstücken evtl. befindliche Spalte können durch Abschmelzen der Kante aufgefüllt werden. Sämtliche Vorteile des Hybridschweißens sind zu verwirklichen: höhere Geschwindigkeit, geringere Leistung, größerer Wirkungsgrad, geringe Betriebskosten sowie die Möglichkeit, auch größere Spalte überbrücken zu können.

Die beiden winkeligen Flächen und deren mindestens eine Kante bilden eine Kehlnahtanordnung, die auch beim Verschweißen beschichteter, insbesondere verzinkter Werkstücke mit Vorteil verwendet werden kann.

Im Falle des Verschweißens von Taylored Blanks wird das Verfahren vorteilhafterweise so durchgeführt, daß zwei unterschiedlich dicke Werkstücke angeordnet werden und der Lichtbogen im wesentlichen auf der vorspringenden Kante des dickeren Werkstücks geführt wird. Infolgedessen erfolgt nur auf einer Seite des stumpfen Stoßes ein Werkstückvorsprung, mit dem der Lichtbogen sicher geführt werden kann.

In Weiterbildung der Erfindung wird das Verfahren so durchgeführt, daß ein vorlaufender Lichtbogen, ein nachlaufender Lichtbogen oder ein außerhalb der Spur des Laserstrahls seitlich von diesem etwa auf gleicher Höhe laufender Lichtbogen vom dünneren Werkstück aus im Winkel angestellt verwendet wird. Mit sämtlichen vorbeschriebenen Verfahrensmaßnahmen der Führung des Lichtbogens in den werkstücknahen Prozeßbereich, also in den Bereich der Entwicklung von Metalldampf bzw. laserinduziertem Plasma, lassen sich die vorbeschriebenen Hauptvorteile erreichen. Es ist jeweils möglich, die vorspringende Kante des dickeren Werkstücks abzurunden, ohne daß der im wesentlichen vertikale Laserstrahl abgeschattet wird.

Insbesondere letzteres gilt auch für die nachlaufende Elektrode, deren Lichtbogen hinter der Elektrode auf einer vergleichsweise scharfen vorspringenden Kante des dickeren Werkstücks im Prozeßbereich der Laserstrahlung geführt wird, wobei durch die zusätzlich entstehende Schmelze ebenfalls ein homogener Übergang zwischen den beiden oberen Flächen der miteinander verbundenen Werkstücke erreicht werden kann. Eine Geschwindigkeitssteigerung hat sich insbesondere beim Verschweißen dünner Bleche ergeben, deren Wärmeabfuhr aus dem Verschweißbereich vergleichsweise gering ist.

Das erfindungsgemäße Verfahren kann so durchgeführt werden, daß als Werkstücke zwei Bleche verwendet werden, von denen eines mit einer Kantenfläche winklig zu einer Seitenfläche des anderen Blechs angeordnet wird und der Lichtbogen im wesentlichen von der Kante des einen Blechs geführt wird. Diese spezielle Anordnung der beiden Bleche ermöglicht es, das aus kombiniertem Laserstrahl- und Lichtbogenschweißen bestehende Hybridschweißen auch bei herkömmlichen Bauteilen mit Kantenführung des Lichtbogens auszuführen und eine dementsprechende Verbindungssicherheit zu erreichen.

Das Verfahren kann so durchgeführt werden, daß als Werkstücke zwei verzinkte Bleche verwendet werden, von denen eines zu einer Seitenfläche des anderen Blechs in der Nähe des Nahtbereichs unter einem Winkel angestellt wird. Infolgedessen bildet die Kantenfläche des angestellten Blechs einen spitzen Winkel mit der benachbarten Seitenfläche des anderen Blechs und die Seitenfläche des im Winkel angestellten Blechs bildet mit der Seitenfläche des anderen Blechs ebenfalls einen spitzen Winkel. Das im Nahtbereich befindliche Zink kann durch die vorlaufende Schweißwärme verdampfen, so daß die Schmelze eine ausreichende Verbindung herstellt.

Das Verfahren kann vorteilhaft dadurch weitergebildet werden, daß als Werkstücke zwei Bleche verwendet werden, deren Kantenflächen die winkeligen Flächen und zwei Kanten des Nahtbereichs bilden, auf denen der Lichtbogen geführt wird. Dabei stehen also die Bleche bzw. deren Kantenbereiche so im Winkel zu einander, daß die Kantenführung des Lichtbogens erreicht wird. Dieses Verfahren kann auch mit verzinkten Blechen durchgeführt werden, da das Zink zu beiden Seiten der Bleche ungehindert wegdampfen kann. Die vorbeschriebene Verwendung der beiden Bleche ist insbesondere dann vorteilhaft, wenn diese gleiche Dicke aufweisen.

Die vorbeschriebenen Verfahren sind insbesondere für den Einsatz im Karosseriebau von Kraftfahrzeugen von Bedeutung. Das Verfahren wird hierbei vorteilhaft durchgeführt, wenn mit ihm Blechhohlträger hergestellt werden.

Das Verfahren kann derart durchgeführt werden, daß außer einer dem Laserstrahl vorlaufenden Elektrode gleichzeitig auch eine dem Laserstrahl nachlaufende Elektrode verwendet wird, daß mit dem Lichtbogen der vorlaufenden Elektrode die vorspringende Kante im Sinne eines Abrundens angeschmolzen wird, und daß der Lichtbogen von der nachlaufenden Elektrode mit dieser in die Dampfkapillare des Laserstrahls hineingeführt wird.

Bei diesem Verfahren werden gleichzeitig zwei Elektroden eingesetzt, die unterschiedliche Aufgaben erfüllen. Mit dem Lichtbogen der vorlaufenden Elektrode wird die vorspringende Kante des dickeren Werkstück im Sinne einer Abrundung angeschmolzen. Dieses Abschmelzen sorgt für eine niveaumäßige Homogenisierung im Nahtbereich und liefert Werkstoff in einen etwaigen Spalt. Durch den Lichtbogen der nachlaufenden Elektrode wird Energie in den Schweißbereich und insbesondere in die durch den Laserstrahl gebildete Dampfkapillare geliefert, wenn der Lichtbogen mit der nachlaufenden Elektrode entsprechend geführt wird. Es kann eine erhebliche Geschwindigkeitssteigerung erreicht werden. Es kann aber auch ein Tiefschweißprozeß erreicht werden, der es gestattet, bei gleicher Schweißgeschwindigkeit eine größere Schweißtiefe zu erreichen, um dickere Werkstücke miteinander zu verschweißen.

Es ist in besonderer Weise vorteilhaft, das Verfahren so durchzuführen, daß eine Lichtbogenzündung einer oder mehrerer Elektroden mit intensitätsmodulierter und/oder gepulster Laserstrahlung erfolgt, daß der Lichtbogen nach seiner Zündung von selbst erlischt oder seine Elektrodenspannung unter die Brennspannung gesenkt wird, und daß danach eine erneute Lichtbogenzündung erfolgt. Infolge der Intensitätsmodulierung und/oder infolge der Pulsung der Laserstrahlung kann ggfs. unter Einflußnahme auf den Lichtbogen erreicht werden, daß der Lichtbogen nicht ununterbrochen brennen kann oder bei ununterbrochenem Brennen weitergezogen wird. Er brennt zwangsweise dort, wo der Laserstrahl auf die Oberfläche des Werkstücks trifft und für eine Vorionisierung sorgt. Entsprechend dieser Vorionisierung gibt es einen Weg des geringsten Widerstands von der Elektrode zur Oberfläche des Werkstücks, den sich der Lichtbogen sucht. Da die Vorionisierung im Bereich der Dampfkapillaren am größten ist, wird der Lichtbogen zusätzlich thermische Energie genau dort der Bearbeitungsstelle des Werkstücks zuführen.

Um zu erreichen, daß der hinter dem Laserstrahl erzeugte Lichtbogen ggfs. trotz der bereits durch den vorlaufenden Lichtbogen abgerundeten Kante des dickeren Werkstücks möglichst wenig seitlich abgelenkt wird und infolgedessen nur zum Teil der durch den Laserstrahl bedingten Vorionisierung des Schweißbereichs folgt, wird das Verfahren so durchgeführt, daß die nachlaufende Elektrode aus der Spur des Laserstrahls, von der abgerundeten Kante des dickeren Werkstücks entfernt geführt wird. Die Kante des dickeren Werkstücks hat dann nicht mehr durch eine entsprechende Ausbildung des elektrischen Felds die Möglichkeit, den Lichtbogen von der Dampfkapillaren abzulenken.

Wenn der Laserstrahl stärker fokussiert ist, als ein von den Werkstücken gebildeter Spalt breit ist, ergibt sich die Möglichkeit höhere Intensitäten der Laserstrahlung anzuwenden und damit höhere Geschwindigkeiten zu erreichen. Höhere Intensitäten durch stärkere Fokussierung lassen sich bei einem Verfahren ohne Anwendung eines zusätzlichen Lichtbogens zwar ebenfalls erreichen und damit wäre auch eine Steigerung der Schweißgeschwindigkeit möglich, jedoch würde die Naht derart schlank werden, daß sich bereits geringste Fehler bei der Kantenvorbereitung extrem negativ auswirken und kaum noch eine vernünftige Schweißnahtgeommetrie entstehen würde. Bereits geringe Spalte zwischen den Werkstücken würden von einem stärker fokussierten Laserstrahl voll durchstrahlt werden, ohne daß die beiden Werkstücke miteinander zu verbinden wären.

Die Erfindung wird anhand der Zeichnung erläutert. Es zeigt:
- Fig.1: eine schematische Darstellung einer Vorrichtung zum Verschweißen von Taylored Blanks mit Hilfe von Laserstrahlung und Lichtbogen,
- Fig.2: eine schematische Darstellung der Vorrichtung der Fig.1 in Richtung A,
- Fig.3: eine der Fig.1 ähnliche Darstellung zur Erläuterung des Tiefschweißeffekts,
- Fig.4: zwei Schnittbilder durch den Nahtbereich zweier miteinander verschweißter Taylored Blanks bei herkömmlichem Verschweißen mit Laserstrahlung und beim Verschweißen mit kombinierter Laserstrahl/Lichtbogen-Verschweißung, im sogenannten Hybrid-Schweißverfahren,
- Fig.5: eine der Fig.2 ähnliche Darstellung für das Verschweißen zweier Werkstücke, nämlich zweier einander benachbarter paralleler Bleche,
- Fig.6: ein Schnittbild durch den Nahtbereich bei kombinierter Laserstrahl/Lichtbogen-Verschweißung,
- Fig.7a bis 7g: einander ähnliche schematische Darstellungen von schweißfertigen oder verschweißten Werkstücken im Schnitt, und
- Fig.8: eine perspektivische Darstellung eines Blechhohlträgers mit zwei unterschiedlichen Nahtausbildungen.

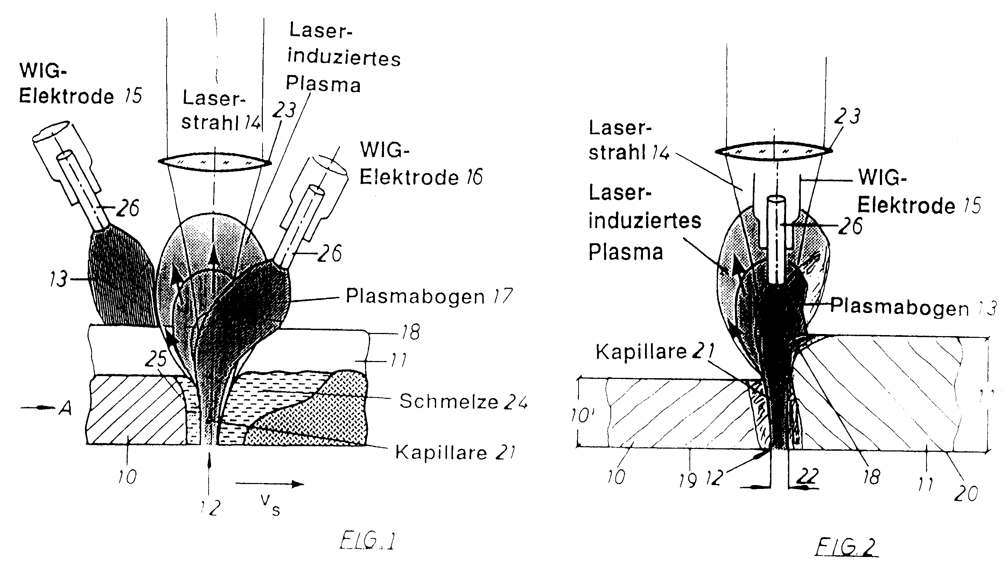

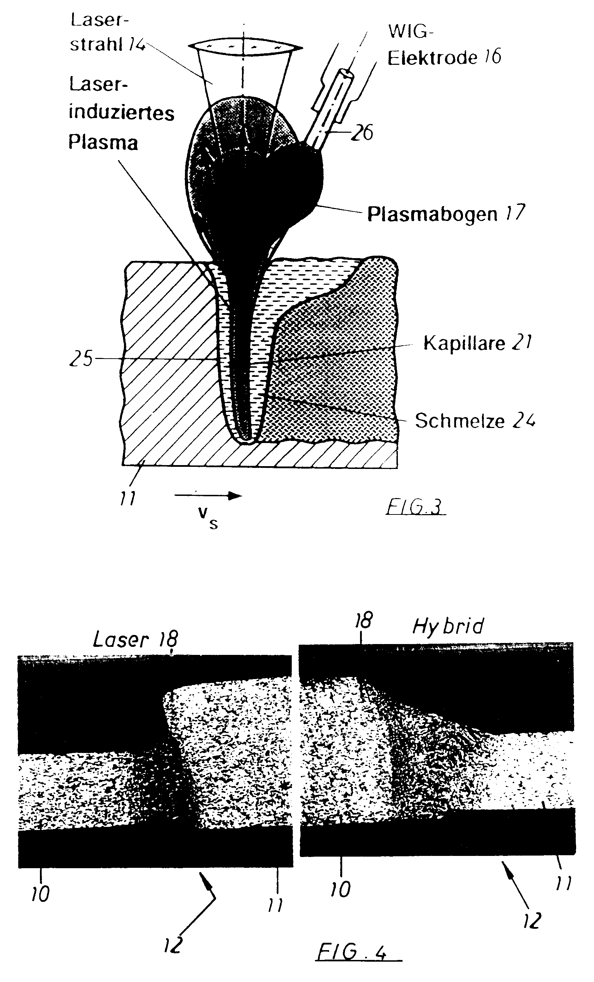

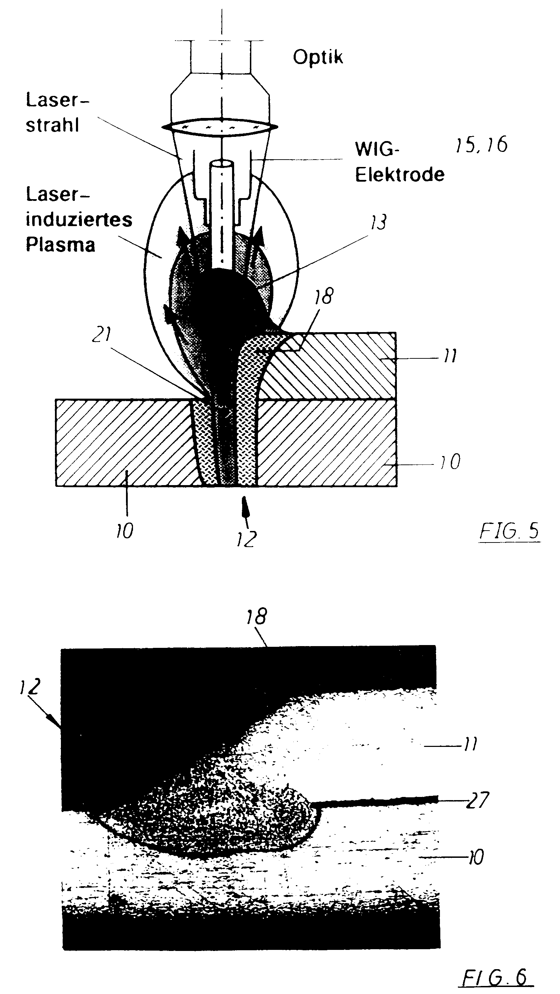

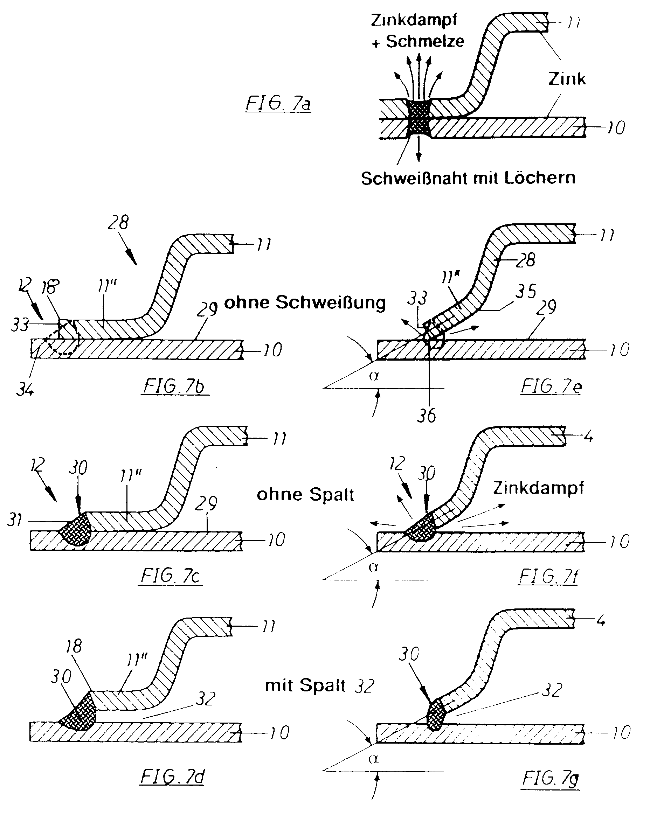

Die Fig.1,2 zeigen zwei Werkstücke 10,11, deren Unterseiten 19,20 in derselben Ebene angeordnet sind, also miteinander fluchten. Die Werkstücke 10,11 haben unterschiedliche Dicken 10',11', so daß das Werkstück 11 vertikal vorspringt. Bei der insbesondere aus Fig.2 ersichtlichen Anordnung in Form eines stumpfen Stoßes wird ein Nahtbereich 12 gebildet, über den eine Kante 18 des dickeren Werkstücks vertikal vorspringt.

Um die Werkstücke 10,11 miteinander zu verschweißen, ist von einer Laserschweißvorrichtung nur die Bearbeitungsoptik durch eine Fokussierlinse 23 symbolisiert. Mit dieser Fokussierlinse 23 wird ein Laserstrahl 14 auf den Nahtbereich 12 fokussiert. Es ist ersichtlich, daß dabei die vorspringende Kante 18 stört, nämlich einen Teil der Laserstrahlung abschattet.

Mit Hilfe der Laserstrahlung des Laserstrahls 14 wird im Nahtbereich 12, in dem die Werkstücke 10,11 dicht aneinanderliegen oder im Falle einer schlechten Nahtvorbereitung oder infolge von Positionierungstoleranzen einen Spalt 22 bilden, Werkstoff verdampft. Es bildet sich das schematisch dargestellte laserinduzierte Plasma aus, also ionisierter Werkstoff in Gasform bzw. Werkstoff in Dampfform, der sich entsprechend den eingezeichneten Pfeilen vom Nahtbereich 12 entfernt. Die sich infolgedessen ausbildende Dampfkapillare 21 ist also ein mit Metalldampf gefüllter Hohlraum, beidseitig begrenzt von Schmelze 24, wobei dieser Werkstoff infolge der Einkopplung von Energie der Laserstrahlung geschmolzen wird. In den Darstellungen ist v_{S} die relative Vorschubgeschwindigkeit der Werkstücke 10,11, wobei die im Nachlauf zur Dampfkapillaren 21 angeordnete Schmelze wegen ihrer Aufheizung und der zur Erstarrung erforderlichen Zeit ein größeres Volumen besitzt, als der vergleichsweise dünne Schmelzefilm zwischen der Kapillaren 21 und der festen Schmelzfront 25.

In Fig.1 sind zwei Elektroden 15,16 dargestellt. Beide Elektroden 15,16 sind WIG-Elektroden, bestehen also aus einem Elektrodenstab 26 aus Wolfram, der in Verbindung mit einem Inertgas eingesetzt wird. Bei Anwendung einer geeigneten Elektrodenspannung bildet sich zwischen einem Elektrodenkörper 26 und den eine Gegenelektrode bildenden Werkstücken 10,11 ein Lichtbogen 13 bzw. 17 aus. Alle Elektroden sind jeweils im Winkel zum werkstücknahen Prozeßbereich hin angestellt.

Aus Fig.1 ist ersichtlich, daß die Elektrode 15 dem Laserstrahl 14 vorläuft und dementsprechend auch der zugehörige Lichtbogen 13. Der Lichtbogen 13 fußt gemäß Fig.2 auf der Kante 18 des dickeren Werkstücks 11. Er bewirkt hier ein Aufschmelzen des Werkstoffs dieser Kante 18, der als Schmelze in den Nahtbereich 12 abfließen kann. Die Schmelze fließt in einen hier möglicherweise vorhandenen Spalt oder sammelt sich so an, daß eine Abrundung des Eckbereichs zwischen dem dünneren Werkstück 10 und der vertikalen Fläche des dickeren Werkstücks 11 erfolgt. Das ergibt sich durch Vergleich der beiden Darstellungen der Fig.4. In dieser Figur ist links der Nahtbereich zweier in herkömmlicher Weise durch Laserstrahlung verschweißter Taylored Blanks dargestellt, wobei ersichtlich ist, daß mit einem wesentlichen Nahteinfall sowohl auf der Werkstückoberseite, als auch auf der Werkstückunterseite der Werkstücke 10,11 gerechnet werden muß. Es ergibt sich auch ein qualitätsmindernder Verzug im Bereich 12 der Schweißnaht, wie aus der nicht vertikalen freien Seitenfläche unterhalb der Kante 18 des dickeren Werkstücks 11 ersichtlich ist. Im Vergleich dazu zeigt sich der Nahtbereich 12 bei dem Verschweissen der Werkstücke 10,11 mit zur Laserstrahlung zusätzlicher Verschweißung mit einem Lichtbogen stark abgeflacht. Eine für die Verbindungsfestigkeit schädliche Kerbwirkung durch Nahteinfall braucht nicht befürchtet zu werden.

Fig.1 zeigt außer der vorlaufenden Elektrode 15 eine nachlaufende Elektrode 16, deren Lichtbogen 17 allerdings nicht auf der Kante 18 des dickeren Werkstücks 11 fußt. Vielmehr wird der Lichtbogen 17 von dem Elektrodenstab 26 ausgehend in die Dampfkapillare 21 des Laserstrahls 14 hineingeführt, was sich im wesentlichen auch durch die Laserstrahlung bewirkte Vorionisierung ergibt, so daß das Plasma 17 der Elektrode 16 infolge des laserinduzierten Plasmas zum Laserstrahl 14 hin bzw. etwa gradlinig bis zur oberen Öffnung der Dampfkapillaren 21 und dann in diese hinein verläuft. Dabei kann eine vollständige Durchschweißung über die gesamte Werkstückhöhe erreicht werden.

Fig.3 zeigt, wie die Führung des Plasmas 17 durch das laserinduzierte Plasma in die Dampfkapillare 21 hinein dazu benutzt werden kann, um einen Tiefschweißeffekt zu bewirken, bei dem also die über das Plasma des Lichtbogens 17 eingekoppelte Energie bis in die Tiefe der Dampfkapillare 21 vordringen kann, um dabei in die Wände der Dampfkapillaren eingekoppelt zu werden. Für die Führung des Lichtbogens vorteilhafte Maßnahmen sind ausführlich in der Deutschen Patentanmeldung 43 34 568 (Offenlegungstag : 13.4.95) beschrieben. Insbesondere erfolgt eine Lichtbogenzündung der nachlaufenden Elektrode 16 mit intensitätsmodulierter und/oder gepulster Laserstrahlung. Der Lichtbogen 17 kann nach seiner Zündung entweder selbst erlöschen, oder seine Elektrodenspannung wird unter seine Brennspannung gesenkt, so daß dadurch das Erlöschen bewirkt wird. Anschließend erfolgt mit der moduliert ansteigenden Elektrodenspannung oder einer erneuten Pulsung eine erneute Lichtenbogenzündung vom Elektrodenkörper 26 in den vorionisierten Bereich des laserinduzierten Plasmas hinein.

Die der Fig.2 ähnliche Darstellung der Fig.5 ist für gleiche Bauteile mit gleichen Bezugszeichen versehen. Insoweit wird auf die Beschreibung zu Fig.2 Bezug genommen. Abweichend von Fig.2 sind in Fig.5 zwei Bleche dargestellt, deren Anordnung der Anordnung in Fig.7b entspricht. Es ist aus Fig.5 ersichtlich, daß der von der WIG-Elektrode 15 ausgehende Lichtbogen 13 auf der Kante 18 des Werkstücks 11 fußt und hier ein Aufschmelzen des Werkstoffs bewirkt, der als Schmelze in den Nahtbereich 12 abfließen kann. Die weitere Bezeichnung der Elektrode mit 16 bringt zum Ausdruck, daß das Verfahren gem. Fig.1 auch mit nachlaufender oder seitlich der Schweißnaht geführter Elektrode 16 durchgeführt werden kann, wie zu Fig.1 beschrieben wurde. Beim Abfließen der Schmelze in den Nahtbereich 12 entsteht eine Naht gem. Fig.6, dergemäß Fig.2 etwa gleichstarke Werkstücke 10,11 mit geringem Spalt 27 zwischen sich verschweißt wurden, und zwar mit einem Hybridverfahren mit Nd:YAG-Laser und TIG-Elektrode. Die Abschmelzung der Kante 18 hat zu der ersichtlichen vergleichsweise flachen Front im Nahtbereich 12 geführt, wobei nicht durchgeschweißt wurde, abweichend von der schematischen Darstellung der Fig.5. Wäre das Werkstück 11 dicker, also beispielsweise dreimal so dick, wie das Werkstück 10, so würde sich eine steilere Nahtfront ergeben, weil die Abschmelzung der Kante 18 vergleichsweise geringer sein kann.

Fig.7b zeigt die schematische Anordnung der Werkstücke 10,11 im Nahtbereich 12 vor der Verschweißung. Das als Blech ausgebildete Werkstück 11 ist im Kantenbereich 12 mit einer Abkröpfung 28 versehen, so daß der abgekröpfte Blechrand 11'' der benachbarten Seitenfläche 29 des ebenfalls als Blech ausgebildeten Werkstücks 10 anliegend benachbart werden kann. Beim Hybridschweißen werden der in Fig.7b gestrichelt angedeutete Nahtbereich und die Kante 18 aufgeschmolzen, so daß sich insgesamt der in Fig.7c dargestellte Schweißnahtquerschnitt 30 ergibt. Die Nahtfront 31 ist schräg und etwa unter 45 Grad geneigt.

Wird das Werkstück 11 mit seinem Blechrand 11'' gem. Fig.7d unter Spaltbildung dem Werkstück 10 benachbart angeordnet, so ist eine Aufschweißung der Kante 18 durch den Lichtbogen der Elektrode 15 gem. Fig.5 ebenfalls möglich, wobei sich ein etwas größerer Schweißnahtquerschnitt 30 ergibt, möglicherweise mit einem leichten Nahteinfall infolge des Spalts 32. Bei dieser Anordnung ist die Kantenfläche 33 des Werkstücks 11 spitzwinklig zur Seitenfläche 29 des Werkstücks 10 angeordnet.

Beim Überlappschweißen verzinkter Bleche entstehen speziell im Karosserie- oder Automobilbaubereich Probleme. Ursache ist die niedrige Verdampfungstemperatur des Zinks. Verdampfendes Zink führt aufgrund des entstehenden hohen Dampfdrucks zu Schmelzauswürfen. Fig.7a zeigt als verzinkte Bleche ausgebildete Werkstücke 10,11, die im Schweißbereich überlappend aneinanderliegen. Das herkömmliche Verschweißen und auch das Hybridschweißen führt zu einer fehlerhaften Schweißnaht, wobei die Fehler beispielsweise als Löcher auftreten, weil die Schmelze vom Zinkdampf ausgetrieben wurde. Es ist allgemein bekannt, die Werkstücke mit einem definierten Spalt zu einander anzuordnen. Der Spalt ermöglicht dem Zink zu verdampfen, ohne die Schweißnaht zu beeinträchtigen. Wird der Spalt jedoch zu groß, z.B. größer als 0,5 mm, so kann auch beim Hybridschweißen das fehlende Schmelzvolumen durch das größere Gesamtschmelzbad nicht mehr ausgeglichen werden.

Um zu erreichen, daß auch verzinkte Bleche im Hybridschweißverfahren einwandfrei zu verschweißen sind, wird das in den Fig.7b bis 7d dargestellte Verfahren modifiziert. Beibehalten wird dabei die Verkürzung bzw. Verschmälerung des Blechrand 11'' gegenüber dem Werkstück 10, dessen Unterkante 34 gegenüber der Kantenfläche 33 vorspringt. Infolgedessen wird bei einer Anordnung gem. Fig.7b zwischen der Kantenfläche 33 und der Seitenfläche 29 ein rechter Winkel erzielt.

Abweichend von Fig.7b wird das Werkstück 11 gem. Fig.7e mit Blechrand 11'' im Winkel zum Werkstück 10 bzw. dessen Seitenfläche 29 angestellt. Der Winkel α beträgt beispielsweise 35 Winkelgrad. Die Kröpfung 28 ist vergleichsweise offen. Die Kantenfläche 33 bildet mit der Seitenfläche 29 einen spitzen Winkel, ebenso wie die Seitenfläche 35 des Blechrands 11''. Die dem Werkstück 10 nahe Kante 36 des Werkstücks 11 liegt an der Seitenfläche 29 an, so daß sich über die Länge gesehen eine Linienberührung ergibt. Der aufzuschmelzende Nahtquerschnitt ist gestrichelt angedeutet.

Bei Verschweißen der in Fig.7e dargestellten Konfiguration kann der Zinkdampf aus dem Nahtbereich 12 entweichen, wie es durch die Pfeile in den Fig.7e und 7f dargestellt wurde. Beim Verschweißen entsteht eine einwandfreie, löcherfreie Naht mit Nahtquerschnitt 30. In Fi.7g hat das Werkstück 11 einen etwas größeren Abstand vom Werkstück 10, als in Fig.7f. Infolgedessen entsteht ein Spalt 32, der ein noch besseres Entweichen von Zinkdampf ermöglicht. Der Nahtquerschnitt 30 weicht von dem der Fig.7f etwas ab, bedingt durch einen geänderten Schmelzeabfluß von der Kante 18 bzw. der Kantenfläche 33 des Werkstücks 11. Es wird jedoch eine ausreichende Verbindungsfestigkeit auch bei vorhandenem Spalt 32 erreicht.

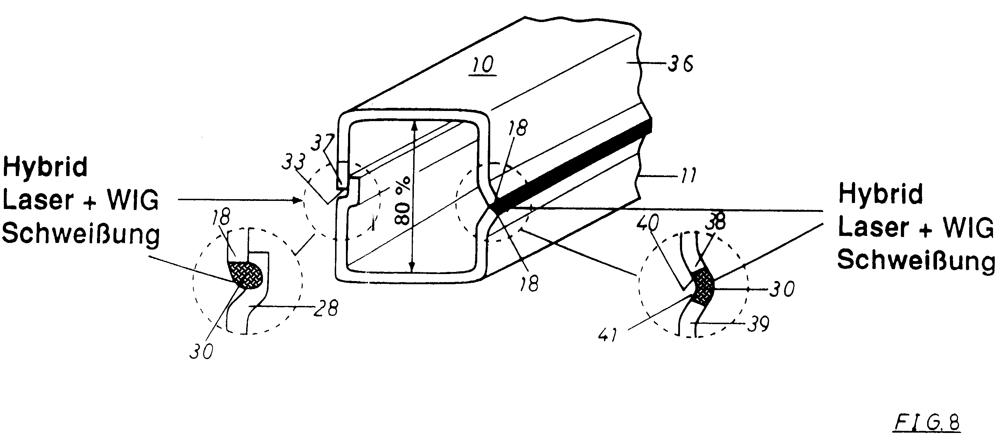

In Fig.8 ist ein Blechhohlträger 36 dargestellt, also im wesentlichen ein Rohr, das aus den beiden als Halbschalen ausgebildeten Werkstücken 10 und 11 hergestellt werden soll. Im Bereich der linken Naht des Blechhohlträgers 36 ist das Werkstück 11 mit einer in das Trägerinnere vorspringenden Abkröpfung 28 versehen, die mit dem Rand 37 des Werkstücks 10 einen Überlappstoß bildet. Es ist eine Kantenfläche 33 des Randes 37 winklig zur Abkröpfung 28 bzw. zum Werkstück 10 angeordnet, so daß sich mit Hilfe der Kante 18 des Randes 37 eine Führung des Lichtbogens 13,17 beim Schweißen erreichen läßt, wobei eine im linken Detail der Fig.8 dargestellte Schweißnaht mit etwa tropfenförmigem Nahtquerschnitt 30 hergestellt wird.

Die rechte Naht des Blechhohlträgers 36 der Fig.8 zeigt Ränder 38,39 der Werkstücke 10,11, die nach außen abgewinkelt sind, so daß ihre Kantenflächen 40,41 nicht parallel bzw. stumpf aneinandergrenzen, sondern einen Winkel einschließen, infolgedessen zwei Kanten 18 gebildet werden, mit denen der Lichtbogen 13,17 beim Schweißen geführt werden kann. Beim Schweißen werden die Kanten 18 und Ränder 38,39 der Werkstücke 10,11 so aufgeschmolzen, daß sich der im rechten Detail der Fig.8 dargestellte Nahtquerschnitt 30 ergibt, demzufolge der gesamte Nahtbereich des fertiggestellten Blechhohlträgers 36 etwa gleichbleibenden Querschnitt hat. Auch in diesem Fall können größere Spalte problemlos überbrückt werden, da aufgrund des abgewinkelten Bleches ausreichend Schmelzgut zur Verfügung steht.

Die vorbeschriebenen Kehlnahtschweißungen insbesondere von Blechen haben aber nicht nur fehlerfreie Nahtausbildung bei verzinkten Oberflächen als Vorteil. Vielmehr macht sich vorteilhaft auch bemerkbar, daß die Positionierungsgenauigkeit der Werkstücke geringer sein kann. Es muß nicht gewährleistet sein, daß der Spalt zwischen den beiden zu verschweißenden Werkstücken eine vorbestimmte Spaltweite von z.B. 0,5 mm nicht überschreitet. Ferner ermöglichen die vorbeschriebenen Schweißverfahren grundsätzlich Werkstoffeinsparungen bei geschicktem Konstruieren. Beispielsweise werden bei herkömmlicher Herstellung eines Blechhohlträgers Halbschalen mit hutförmigem Querschnitt eingesetzt, deren Ränder durch Punktschweißung verbunden werden und hierzu eine Randbreite von bis zu 15 mm haben müssen. Auch bei herkömmlichem Verschweissen derartiger hutförmiger Halbschalen mit Laserschweißung ist noch eine nicht unbeträchtliche Randbreite von etwa 5 mm erforderlich. Im Vergleich dazu läßt Fig.8 erkennen, daß die Auskröpfung 28 bzw. die Abwinkelung der Ränder 38,39 vergleichsweise geringen Mehraufwand an Werkstoff für die Nahtherstellung bedeuten. Der Blechhohlträger 36 kann bei kleineren Querschnitten mit bis zu 80% geringerem Werkstoffaufwand durch wegfallende Ränder bei hutförmigem Profilquerschnitt hergestellt werden.

Für die Erfindung ist wesentlich, daß der auf einer Kante 18 eines Werkstücks 10,11 geführte Lichtbogen 13,17 durch die laserinduzierte Verdampfung von Werkstoff stabilisiert wird.

## Patentansprüche

1. Verfahren zum Verschweißen von Werkstücken (10,11), mit eine Verdampfung von Werkstoff bewirkender Laserstrahlung, bei dem im Nahtbereich (12) winklige Flächen und mindestens eine Kante (18) aufweisende Werkstücke (10,11) eingesetzt werden, insbesondere Taylored Blanks oder verzinkte Bleche, **dadurch gekennzeichnet**, daß beim Verschweißen der Werkstücke (10,11) außer der Laserstrahlung ein Lichtbogen (13,17) in den werkstücknahen Prozeßbereich der Laserstrahlung geführt wird, wobei die Führung des Lichtbogens (13,17) auf der Kante (18) eines Werkstücks (10,11) erfolgt.

2. Verfahren nach Anspruch 1, **dadurch gekennzeichnet**, daß zwei unterschiedlich dicke Werkstücke (10,11) im stumpfen Stoß mit fluchtenden Unterseiten (19,20) angeordnet werden und der Lichtbogen (13,17) im wesentlichen auf der vorspringenden Kante (18) des dickeren Werkstücks (11) geführt wird.

3. Verfahren nach Anspruch 2, **dadurch gekennzeichnet**, daß ein vorlaufender Lichtbogen (13), ein nachlaufender Lichtbogen (17) oder ein außerhalb der Spur des Laserstrahls (14) seitlich von diesem etwa auf gleicher Höhe laufender Lichtbogen (27) vom dünneren Werkstück (10) aus im Winkel angestellt verwendet wird.

4. Verfahren nach einem der Ansprüche 1 bis 3, **dadurch gekennzeichnet**, daß als Werkstücke (10,11) zwei Bleche verwendet werden, von denen eines mit einer Kantenfläche (33) winklig zu einer Seitenfläche (29) des anderen Blechs (Werkstück 10) angeordnet wird und der Lichtbogen (13,17) im wesentlichen von der Kante (18) des einen Blechs (Werkstück 11) geführt wird.

5. Verfahren nach einem der Ansprüche 1 bis 4, **dadurch gekennzeichnet**, daß als Werkstücke (10,11) zwei verzinkte Bleche verwendet werden, von denen eines zu einer Seitenfläche (29) des anderen Blechs in der Nähe des Nahtbereichs (23) unter einem Winkel (α) angestellt wird.

6. Verfahren nach einem der Ansprüche 1 bis 5, **dadurch gekennzeichnet**, daß als Werkstücke (10,11) zwei Bleche verwendet werden deren Kantenflächen (40,41) die winkeligen Flächen und zwei Kanten (18) des Nahtbereichs (12) bilden, auf denen der Lichtbogen (13,17) geführt wird.

7. Verfahren nach einem der Ansprüche 1 bis 6, **dadurch gekennzeichnet**, daß mit ihm Blechhohlträger (36) hergestellt werden.

8. Verfahren nach einem der Ansprüche 1 bis 7, **dadurch gekennzeichnet**, daß außer einer dem Laserstrahl (14) vorlaufenden Elektrode (15) gleichzeitig auch eine dem Laserstrahl (14) nachlaufende Elektrode (16) verwendet wird, daß mit dem Lichtbogen (13) der vorlaufenden Elektrode (15) die vorspringende Kante (18) im Sinne eines Abrundens angeschmolzen wird, und daß der Lichtbogen (13) der nachlaufenden Elektrode (17) in die Dampfkapillare (21) des Laserstrahls (14) hineingeführt wird.

9. Verfahren nach einem der Ansprüche 1 bis 8, **dadurch gekennzeichnet**, daß eine Lichtbogenzündung einer oder mehrerer Elektroden (15,16) mit intensitätsmodulierter und/oder gepulster Laserstrahlung erfolgt, daß der Lichtbogen (17) nach seiner Zündung von selbst erlischt oder seine Elektrodenspannung unter die Brennspannung gesenkt wird, und daß danach eine erneute Lichtbogenzündung erfolgt.

10. Verfahren nach Anspruch 8 oder 9, **dadurch gekennzeichnet**, daß die nachlaufende Elektrode (16) aus der Spur des Laserstrahls (14), von der abgerundeten Kante (18) des dickeren Werkstücks (11) entfernt geführt wird.

11. Verfahren nach einem der Ansprüche 1 bis 10, **dadurch gekennzeichnet**, daß der Laserstrahl (14) stärker fokussiert ist, als ein von den Werkstücken (10,11) gebildeter Spalt (22) breit ist.

12. Verfahren nach einem der Ansprüche 1 bis 11**, dadurch gekennzeichnet**, daß der auf einer Kante (18) eines Werkstücks (10,11) geführte Lichtbogen (13,17) durch die laserinduzierte Verdampfung von Werkstoff stabilisiert wird.

## Claims

1. Method for the purpose of welding workpieces (10, 11), comprising laser radiation which causes the material to vaporise, wherein workpieces (10, 11) are used, in particular Taylored blanks or galvanised metal sheets, which comprise angular surfaces and at least one edge (18) in the seam region (12), characterised in that during welding of the workpieces (10, 11) an arc (13, 17), in addition to the laser radiation, is guided into the process region, in the proximity of the workpiece, of the laser radiation, wherein the arc (13, 17) is guided on the edge (18) of a workpiece (10, 11).

2. Method according to claim 1, characterised in that two workpieces (10, 11) of different thickness are disposed in end to end abutment with flush undersides (19, 20) and the arc (13, 17) is guided substantially on the protruding edge (18) of the thicker workpiece (11).

3. Method according to claim 2, characterised in that an advance arc (13), a follow-on arc (17) or an arc (27) which travels outside the trace of the laser beam (14) in a lateral manner therefrom approximately at the same height is used set at an angle from the thinner workpiece (10).

4. Method according to any one of the claims 1 to 3, characterised in that two metal sheets are used as the workpieces (10, 11), of which one is disposed with an edge surface (33) at an angle with respect to a lateral surface (29) of the other metal sheet (workpiece 10), and the arc (13, 17) is guided substantially by the edge (18) of the one metal sheet (workpiece 11).

5. Method according to any one of the claims 1 to 4, characterised in that two galvanised metal sheets are used as the workpieces (10, 11), of which one is set at an angle (α) to a lateral surface (29) of the other metal sheet in the proximity of the seam region (23).

6. Method according to any one of the claims 1 to 5, characterised in that two metal sheets are used as the workpieces (10, 11), the edge surfaces (40, 41) of which form the angular surfaces and two edges (18) of the seam region (12), on which edges the arc (13, 17) is guided.

7. Method according to any one of the claims 1 to 6, characterised in that hollow sheet metal supports (36) can be produced by applying the said method.

8. Method according to any one of the claims 1 to 7, characterised in that in addition to an electrode (15) in advance of the laser beam (14), an electrode (16) which follows-on from the laser beam (14) is used simultaneously, that by means of the arc (13) of the advance electrode (15) the protruding edge (18) is melted slightly so as to be rounded off, and that the arc (13) of the follow-on electrode (17) [sic] is guided into the vapour capillary (21) of the laser beam (14).

9. Method according to any one of the claims 1 to 8, characterised in that an arc of one or several electrodes (15, 16) is ignited by means of intensity-modulated laser radiation and / or pulsed laser radiation, that after ignition the arc (17) extinguishes itself or its electrode voltage is lowered below the burning voltage, and that thereafter the arc is ignited once again.

10. Method according to claim 8 or 9, characterised in that the follow-on electrode (16) is guided out of the trace of the laser beam (14) at a distance from the rounded-off edge (18) of the thicker workpiece (11).

11. Method according to any one of the claims 1 to 10, characterised in that the laser beam (14) is focussed larger than a gap (22), formed by the workpieces (10, 11), is wide.

12. Method according to any one of the claims 1 to 11, characterised in that the arc (13, 17) which is guided on an edge (18) of a workpiece (10, 11) is stabilised by the laser-induced vaporisation of material.

## Revendications

1. Procédé pour souder des pièces (10, 11) à l'aide d'un rayonnement laser qui provoque une évaporation de matériau, selon lequel on utilise des pièces (10, 11) qui présentent dans la zone de joint (12) des surfaces angulaires et au moins une arête (18), en particulier des flans en acier rapide ou des tôles zinguées, **caractérisé** en ce que lors du soudage des pièces (10, 11), on guide, en plus du rayonnement laser, un arc électrique (13, 17) dans la zone de traitement du rayonnement laser voisine des pièces, le guidage de l'arc électrique (13, 17) ayant lieu sur l'arête (18) d'une pièce (10, 11).

2. Procédé selon la revendication 1, **caractérisé** en ce que deux pièces (10, 11) d'épaisseurs différentes sont disposées bout à bout, avec leurs côtés inférieurs (19, 20) dans l'alignement, et l'arc électrique (13, 17) est guidé globalement sur l'arête saillante (18) de la pièce la plus épaisse (11).

3. Procédé selon la revendication 2, **caractérisé** en ce qu'on utilise, à partir de la pièce la plus mince (10), un arc électrique (13) situé en avant, un arc électrique (17) situé en arrière ou un arc électrique (27) qui s'étend à l'extérieur de la trace du rayon laser (14), sur le côté de celui-ci et à peu près à la même hauteur, suivant un certain angle.

4. Procédé selon l'une des revendications 1 à 3, **caractérisé** en ce qu'on utilise comme pièces (10, 11) deux tôles dont l'une est disposée avec une surface d'arête (33) qui définit un angle avec une surface latérale (29) de l'autre tôle (pièce 10), et l'arc électrique (13, 17) est guidé globalement par l'arête (18) de la première tôle (pièce 11).

5. Procédé selon l'une des revendications 1 à 4, **caractérisé** en ce qu'on utilise comme pièces (10, 11) deux tôles zinguées dont l'une est placée suivant un angle (α) par rapport à une surface latérale (29) de l'autre tôle près de la zone de joint (23).

6. Procédé selon l'une des revendications 1 à 5, **caractérisé** en ce qu'on utilise comme pièces (10, 11) deux tôles dont les surfaces d'arête (40, 41) forment les surfaces angulaires et deux arêtes (18) de la zone de joint (12) sur lesquelles l'arc électrique (13, 17) est guidé.

7. Procédé selon l'une des revendications 1 à 6, **caractérisé** en ce qu'on fabrique avec ce procédé des poutres creuses en tôle (36).

8. Procédé selon l'une des revendications 1 à 7, **caractérisé** en ce qu'on utilise en même temps, en plus d'une électrode (15) située en avant du rayon laser (14), une électrode (16) située en arrière du rayon laser (15), en ce que l'arc électrique (13) de l'électrode située en avant (15) fait fondre l'arête saillante (18) dans le sens d'un arrondissement, et en ce que l'arc électrique (13) de l'électrode située en arrière (17) est introduit dans le capillaire de vapeur (21) du rayon laser (14).

9. Procédé selon l'une des revendications 1 à 8, **caractérisé** en ce qu'un allumage de l'arc électrique d'une ou plusieurs électrodes (15, 16) a lieu avec un rayonnement laser à intensité modulée et/ou impulsionnel, en ce que l'arc électrique (17), après son allumage, s'éteint tout seul ou sa tension d'électrode devient inférieure à la tension de rupture, et en ce qu'un nouvel allumage d'arc électrique a lieu ensuite.

10. Procédé selon la revendication 8 ou 9, **caractérisé** en ce que l'électrode située en arrière (16) est sortie de la trace du rayon laser (14) et éloignée de l'arête (18) arrondie de la pièce la plus épaisse (11).

11. Procédé selon l'une des revendications 1 à 10, **caractérisé** en ce que le rayon laser (14) est davantage focalisé par rapport à la largeur d'un interstice (22) formé par les pièces (10, 11).

12. Procédé selon l'une des revendications 1 à 11, **caractérisé** en ce que l'arc électrique (13, 17) guidé sur une arête (18) d'une pièce (10, 11) est stabilisé par l'évaporation du matériau induite par laser.
